# EUROPÄISCHE PATENTSCHRIFT

(11) **EP 3 312 049 B1**
(45) Veröffentlichungstag und Bekanntmachung des Hinweises auf die Patenterteilung: **05.08.2020**
(21) Anmeldenummer: 17190737.1
(22) Anmeldetag: 13.09.2017
(51) Int. Cl.: B60N 2/50

(54) **FAHRZEUGSITZ MIT ZUSATZVOLUMEN ZUR NIVEAUREGULIERUNG UND -STABILISIERUNG**
VEHICLE SEAT WITH ADDITIONAL VOLUME FOR SELF-LEVELLING AND STABILISATION
SIÈGE DE VÉHICULE POURVU DE VOLUME SUPPLÉMENTAIRE PERMETTANT LE RÉGLAGE ET LA STABILISATION DU NIVEAU

(30) Priorität: 24.10.2016 DE 102016120194
(43) Veröffentlichungstag der Anmeldung: 25.04.2018
(73) Patentinhaber: GRAMMER AG, 92224 Amberg (DE)
(72) Erfinder: Lorey, Konstantin, 92546 Schmidgaden (DE); Krivenkov, Konstantin, 92224 Amberg (DE); Wittmann, Hubert, 92685 Floß (DE)
(74) Vertreter: Hannke, Christian

(56) Entgegenhaltungen:
- DE-A1- 2 604 809
- DE-A1- 10 330 198
- DE-A1-102007 056 700

## Beschreibung

Die Erfindung betrifft einen Fahrzeugsitz mit einer Vorrichtung zur Niveauregulierung des Fahrzeugsitzes, wobei der Fahrzeugsitz ein durch eine erste Luftfeder gegenüber einem unteren Sitzelement verlagerbares oberes Sitzelement, auf welchem eine Masse anordenbar ist, aufweist, wobei das untere und das obere Sitzelement in einem vorgebbaren Abstand zueinander angeordnet sind und wobei die erste Luftfeder mit einem Zusatzvolumen eines Zusatzvolumenmoduls durch eine erste Fluidverbindung fluidisch verbunden und durch das Zusatzvolumenmodul ein Innendruck der ersten Luftfeder steuerbar ist.

Es sind aus dem Stand der Technik derartige Fahrzeugsitze mit einer Niveauregulierung bekannt. Um den Innendruck der ersten Luftfeder zu manipulieren, ist es notwendig, eine bestimmte Fluidmenge von dem Zusatzvolumen oder der ersten Luftfeder umzupumpen oder den Innendruck des gesamten Systems bestehend aus Zusatzvolumen und erster Luftfeder zu verändern.

Es ist daher ein Kompressor vorgesehen, mittels welchem der Innendruck in dem Zusatzvolumen und der ersten Luftfeder veränderbar ist.

Der Kompressor wird entsprechend oft aktiviert, um den vorgegebenen Abstand zwischen dem unteren und oberen Sitzelement unter allen Betriebsbedingungen möglichst konstant zu halten. Da jedoch der Kompressor sehr laut ist, ist es nachteilig für einen Fahrzeugführer, wenn der Kompressor über einen langen Zeitraum hinweg aktiv ist und die Geräuschkulisse unerträglich macht. Auch können Geräusche hierdurch leichter überhört werden, sowie die laute Geräuschkulisse unter anderem zu Ohrenleiden, Kopfschmerzen oder dergleichen führen.

Aus der DE 10 2007 056 700 A1 ist eine Vorrichtung mit einem Federungssystem bekannt, welches Federungssystem ein mit einer Masse beaufschlagtes erstes Teil, ein zweites Teil sowie eine zwischen diesem ersten Teil und diesem zweiten Teil angeordnete Luftfeder aufweist, wobei mindestens eine Zusatzvolumeneinrichtung für Luft vorgesehen ist, deren Volumen gesteuert veränderbar ist.

Ferner ist aus der DE 103 30 198 A1 eine Federung eines Fahrzeugs bekannt, mit einer Luftfeder und einem Speicher mit einem zusätzlichen Luftvolumen, wobei der Speicher zwei Bereiche umfasst, die durch eine flexible Membrane voneinander getrennt sind, wobei der eine Bereich das zusätzliche Luftvolumen zur Verfügung stellt, während der andere Bereich ein aktives Flüssigkeitsvolumen erfasst, das mit einer Flüssigkeitsspeisung in Verbindung steht.

Es ist demzufolge Aufgabe der vorliegenden Erfindung, einen Fahrzeugsitz mit einer Vorrichtung zur Niveauregulierung bereitzustellen, welche im Betrieb auf einen Kompressor verzichten kann und daher entsprechend leise im Betrieb ist.

Diese Aufgabe wird gemäß den Merkmalen des Patentanspruches 1 und des Patentanspruches 2 gelöst. Vorteilhafte Ausgestaltungen der Erfindung finden sich in den abhängigen Patentansprüchen.

Kerngedanke der Erfindung ist es, einen Fahrzeugsitz mit einer Vorrichtung zur Niveauregulierung des Fahrzeugsitzes gemäß Patentanspruch 1 oder 2 bereitzustellen, wobei der Fahrzeugsitz ein durch eine erste Luftfeder gegenüber einem unteren Sitzelement verlagerbares oberes Sitzelement, auf welchem eine Masse anordenbar ist, aufweist, wobei das untere und das obere Sitzelement in einem vorgebbaren Abstand zueinander angeordnet sind und wobei die erste Luftfeder mit einem Zusatzvolumen eines Zusatzvolumenmoduls durch eine erste Fluidverbindung fluidisch verbunden und durch das Zusatzvolumenmodul ein Innendruck der ersten Luftfeder steuerbar ist, die Vorrichtung ein begrenztes Hilfsvolumen aufweist, welches mittels einer Fluidfördereinheit und einer zweiten Fluidverbindung fluidisch mit dem Zusatzvolumen gekoppelt ist, wobei bei einer Änderung des Abstandes aufgrund einer Gewichtsverlagerung auf dem oberen Sitzelement durch eine Förderung eines Fluid durch die Fluidfördereinheit zwischen dem Hilfsvolumen und dem Zusatzvolumen ein Innendruck des Zusatzvolumens und indirekt der ersten Luftfeder veränderbar ist, um die Änderung des Abstandes auszugleichen.

Bevorzugt ist die erste Luftfeder deformierbar ausgestaltet. Weiter bevorzugt weist der Fahrzeugsitz ein Scherengestell auf, welches zwischen dem unteren Sitzelement und dem oberen Sitzelement angeordnet ist und das untere mit dem oberen Sitzelement verbindet.

Vorzugsweise ist das untere Sitzelement mit einer Fahrzeugkarosserie verbunden oder ist bereits Teil der Karosserie.

Unter dem Begriff "Masse" ist hierbei jeglicher Körper zu verstehen, welcher auf dem oberen Sitzelement anordenbar ist. Bevorzugt handelt es sich bei einer Masse um einen Fahrzeugführer, welcher auf dem Fahrzeugsitz, insbesondere dem oberen Sitzelement, sitzt. Unter dem Begriff "Zusatzvolumenmodul" ist hierbei eine Vorrichtung zu verstehen, welche zumindest ein Zusatzvolumen, insbesondere ein begrenztes Zusatzvolumen umfasst. Weiter ist es denkbar, dass das Zusatzvolumenmodul ein Absperrventil aufweist, so dass die erste Luftfeder fluidisch von dem Zusatzvolumen getrennt ist. Darüber hinaus kann das Zusatzvolumenmodul verschiedene Sensoren umfassen, beispielsweise um Leckagen zu detektieren oder dergleichen.

Das Hilfsvolumen des erfindungsgemäßen Fahrzeugsitzes ist ein begrenztes Hilfsvolumen, das heißt, dass das Hilfsvolumen nur ein begrenztes Volumen aufweisen kann.

Eine Gewichtsverlagerung tritt hierbei beispielsweise bei einem Bergauf- oder Bergabfahren des Fahrzeugs auf, wobei der Fahrzeugsitz entsprechend aus der Horizontalen ausgelenkt ist. Durch diese Auslenkung bewegt sich, beispielsweise im Fall einer Bergauffahrt, die Masse auf dem Fahrzeugsitz weiter nach hinten aufgrund einer Hangabtriebskraft, welche größer als Null ist, wodurch sich der Abstand zwischen dem oberen und dem unteren Sitzelement verändert. Eine Niveauregulierung wird hierdurch notwendig. Durch eine Druckveränderung der ersten Luftfeder durch Umpumpen einer bestimmten Fluidmenge des Hilfsvolumens und des Zusatzvolumens, einhergehend mit einer Innendruckänderung des Hilfsvolumens, des Zusatzvolumens und der ersten Luftfeder, kann der Innendruck der ersten Luftfeder derart angepasst werden, um die Änderung des Abstandes entsprechend auszugleichen.

Gemäß einer besonders bevorzugten Ausführungsform weist die Vorrichtung eine Erkennungseinheit auf, mittels welcher die Änderung des Abstandes erkennbar ist und mittels einer Steuereinheit die Fluidfördereinheit der Innendruck der ersten Luftfeder derart steuerbar ist, um die Änderung des Abstandes auszugleichen.

Bevorzugt umfasst die Erkennungseinheit einen Abstandssensor, mittels welchem der Abstand des oberen Sitzelements zu dem unteren Sitzelement erkennbar und bestimmbar ist. Weiter wird mittels der Steuereinheit die Fluidfördereinheit angesteuert, um die Änderung des Abstandes auszugleichen. Eine derartige Steuerung ist dabei wie folgt vorgesehen. Abhängig von der Änderung des Abstandes wird mittels der Steuereinheit die Menge an Fluid bzw. der nötige Innendruck der ersten Fluidfeder berechnet, welche notwendig ist, den vorgegebenen Abstand wiederherzustellen. Entsprechend wird vorliegend die Fluidfördereinheit durch die Steuereinheit angesteuert, um den benötigten Innendruck in der ersten Luftfeder herzustellen.

Gemäß einer weiteren Ausführungsform ist zwischen dem unteren und dem oberen Sitzelement mindestens eine Dämpfungseinheit zum Dämpfen von Schwingungsbewegungen des oberen Sitzelements relativ zum unteren Sitzelement vorgesehen.

Gemäß einer besonders bevorzugten Ausführungsform weist die Vorrichtung eine Kompressoreinheit auf, mittels welcher bei Belegung des oberen Sitzelements mit der Masse das Zusatzvolumen, gegebenenfalls das Hilfsvolumen und die erste Luftfeder mit einer Fluidmenge bis zu einem bestimmten Druck befüllbar ist, wodurch der Abstand vorgegeben ist.

Lässt sich dementsprechend eine Person auf dem Fahrzeugsitz nieder, so möchte er natürlich diejenige Sitzhöhe einstellen, welche für die jeweilige Person als komfortabel und angenehm erachtet wird. Um die entsprechende Sitzhöhe zu erreichen, muss die erste Luftfeder mit einer gewissen Fluidmenge gefüllt werden, so dass das obere Sitzelement auf die gewünschte Sitzhöhe angehoben wird. Die erste Luftfeder wird hierbei indirekt über das Zusatzvolumen bzw. das Zusatzvolumenmodul mittels des Kompressors mit einer Fluidmenge befüllt, wobei sich insbesondere ein Druckgleichgewicht in der ersten Luftfeder und dem Zusatzvolumen einstellt.

Ist das obere Sitzelement mit der Masse belegt und der Abstand mittels des Kompressors eingestellt, so wird der Kompressor deaktiviert und wird während des Betriebs im Regelfall nicht mehr benötigt. Eine erneute Aktivierung des Kompressors ist nur dann notwendig, wenn eine Leckage oder dergleichen stattfindet oder wenn eine andere Sitzhöhe eingestellt werden soll.

Es ist darüber hinaus gemäß einer bevorzugten Ausführungsform denkbar, dass das Zusatzvolumen und das Hilfsvolumen durch mindestens eine Bypassleitung zu der zweiten Fluidverbindung mit einem elektrischen und/oder magnetischen ersten Ventil fluidisch verbindbar sind, wobei das erste Ventil geöffnet ist während der Befüllung des Zusatzvolumens und der ersten Luftfeder mittels der Kompressoreinheit mit einer Fluidmenge.

Das bedeutet, dass bei einem Befüllen des Zusatzvolumens und der ersten Luftfeder ebenso indirekt das Hilfsvolumen befüllt wird wobei sich insbesondere ein Druckgleichgewicht in der ersten Luftfeder, dem Zusatzvolumen und dem Hilfsvolumen einstellt.

Gemäß einer ersten bevorzugten Ausführungsform ist die Fluidfördereinheit als mindestens eine Flügelzellenpumpe oder eine Drehschieberpumpe ausgestaltet. Insbesondere ist diese zwischen dem Zusatzvolumenmodul, insbesondere zwischen dem Zusatzvolumen, und dem Hilfsvolumen angeordnet, wobei zwischen dem Zusatzvolumenmodul, insbesondere dem Zusatzvolumen, und der Fluidfördereinheit ein elektrisches und/oder magnetisches zweites Ventil angeordnet ist, welches geöffnet ist während der Veränderung des Innendrucks des Zusatzvolumens und der ersten Luftfeder.

Eine Flügelzellenpumpe bzw. eine Drehschieberpumpe, welche mit Hilfsvolumen verbindbar ist, hat gegenüber einem Kompressor oder einer Kompressoreinheit den Vorteil, dass im Betrieb die Flügelzellenpumpe deutlich leiser arbeitet als der ansonsten vorgesehene Kompressor, da die Luft nicht aus der Umgebung, sondern aus dem Hilfsvolumen gefördert wird, welches sich bereits auf dem gleichen Druckniveau wie das Zusatzvolumen und die Luftfeder befindet. Der Lärmpegel wird daher gering gehalten.

Insbesondere ist das vorliegende zweite Ventil nur dann geöffnet, wenn ein Innendruck des Zusatzvolumens und der ersten Luftfeder verändert werden aufgrund der Änderung des Abstandes, wodurch ein Fluidfluss zwischen dem Zusatzvolumen und dem Hilfsvolumen verhinderbar ist. Weiter bevorzugt ist die Fluidfördereinheit nur dann aktiviert, wenn der Innendruck des Zusatzvolumens und der ersten Luftfeder verändert wird, wodurch der Lärmpegel noch weiter minimiert werden kann.

Erfindungsgemäß nach Patentanspruch 2 sind das Zusatzvolumen als eine deformierbare zweite Luftfeder und das gegen die Umgebung geschlossene oder offene Hilfsvolumen als eine deformierbare dritte Luftfeder ausgestaltet, wobei eine Deformationseinrichtung mit der zweiten und dritten Luftfeder verbunden ist und durch Deformierung der zweiten oder der dritten Luftfeder mittels der Deformationseinrichtung der Innendruck der zweiten und dritten Luftfeder veränderbar ist, um den Druck der ersten Luftfeder zu verändern.

Beispielsweise sind die zweite und dritte Luftfeder als ein Balg, eine Luftfeder mit flexibler Außenhaut oder dergleichen ausgebildet.

Bevorzugt umfasst die Deformationseinrichtung einen Motor, insbesondere einen elektrischen Motor mit einem wippenähnlichen Deformationselement, welches je nach Drehrichtung des Motors die zweite oder die dritte Luftfeder deformiert. Eine Deformation kommt insbesondere dadurch zustande, da das Deformationselement auf die jeweilige Luftfeder drückt, die Form der Luftfeder hierdurch verändert und entsprechend den Innendruck der Luftfeder verändert, um indirekt dadurch den Innendruck der ersten Luftfeder zu verändern.

Es ist hierbei auch eine alternative Ausführungsform denkbar, mittels welcher die zugrunde liegende Aufgabe lösbar ist.

Fahrzeugsitz mit einer Vorrichtung zur Niveauregulierung und -stabilisierung des Fahrzeugsitzes, wobei der Fahrzeugsitz ein durch eine erste Luftfeder gegenüber einem unteren Sitzelement verlagerbares oberes Sitzelement, auf welchem eine Masse anordenbar ist, aufweist, wobei das untere und das obere Sitzelement in einem vorgebbaren Abstand zueinander angeordnet sind und wobei die erste Luftfeder mit einem Zusatzvolumen eines Zusatzvolumenmoduls durch eine erste Fluidverbindung fluidisch verbunden und durch das Zusatzvolumenmodul ein Innendruck der ersten Luftfeder steuerbar ist, wobei das Zusatzvolumen als eine deformierbare Luftfeder ausgestaltet ist, welche mittels einer Deformationseinrichtung, welche mit der deformierbaren Luftfeder verbunden ist und durch Deformierung der deformierbaren Luftfeder mittels der Deformationseinrichtung der Innendruck der deformierbaren Luftfeder veränderbar ist, um den Druck der ersten Luftfeder zu verändern, um bei einer Änderung des Abstandes aufgrund einer Gewichtsverlagerung auf dem oberen Sitzelement ein Innendruck des Zusatzvolumens und indirekt der ersten Luftfeder veränderbar ist, um die Änderung des Abstandes auszugleichen.

Besonders bevorzugt weist die Deformationseinrichtung einen Motor, vorzugsweise einen Elektromotor auf, mittels welchem die Deformationseinrichtung betreibbar ist. Weiter bevorzugt ist der Motor derart ausgestaltet, um die deformierbare Luftfeder deformieren zu können.

Erfindungsgemäß nach Patentanspruch 1 ist das Zusatzvolumen als eine Blasenspeichereinheit mit einer Speicherblase ausgestaltet und das Hilfsvolumen weist eine Flüssigkeit auf, wobei mittels der Fluidfördereinheit umfassend eine Flüssigkeitspumpe die Flüssigkeit zwischen der Blasenspeichereinheit, insbesondere der Speicherblase, und dem Hilfsvolumen umpumpbar ist.

Durch eine Erhöhung bzw. Erniedrigung der Flüssigkeitsmenge der Blasenspeichereinheit wird entsprechend durch Kompression eines Gases, welches sich ebenfalls in der Blasenspeichereinheit befindet, der Innendruck in der Blasenspeichereinheit verändert und indirekt hierdurch der Innendruck der ersten Luftfeder entsprechend verändert.

Besonders bevorzugt handelt es sich bei der Flüssigkeit um eine hochviskose Flüssigkeit. Insbesondere handelt es sich bei der Flüssigkeitspumpe um eine Pumpe, welche dafür geeignet und ausgestaltet ist, hochviskose Flüssigkeiten zu fördern.

Darüber hinaus wird die zugrunde liegende Aufgabe auch gelöst von einem Verfahren zur Niveauregulierung eines Fahrzeugsitzes nach einem der Ansprüche 1 bis 7, wobei der Fahrzeugsitz ein durch eine erste Luftfeder gegenüber einem unteren Sitzelement verlagerbares oberes Sitzelement aufweist, wobei die erste Luftfeder mit einem Zusatzvolumen eines Zusatzvolumenmoduls fluidisch verbunden und durch das Zusatzvolumenmodul fluidisch steuerbar ist und ein Hilfsvolumen zu dem Zusatzvolumen hinzuschaltbar ist, umfassend die Verfahrensschritte:
a) Belegen des oberen Sitzelements mit einer Masse;
b) Einstellen eines Abstandes zwischen dem unteren und dem oberen Sitzelement durch Befüllen des Zusatzvolumens und indirekt der ersten Luftfeder mittels eines Kompressors mit einer benötigten Fluidmenge und Deaktivieren des Kompressors nach dem Befüllen;
c) Erkennen einer Änderung des Abstandes durch eine Gewichtsverlagerung;
d) Veränderung des Druckes innerhalb des Zusatzvolumens und der ersten Luftfeder durch Förderung des Fluids zwischen dem Zusatzvolumen und dem Hilfsvolumen, um der Änderung des Abstandes entgegenzuwirken.

Ein Belegen des oberen Sitzelements mit der Masse kann beispielsweise ein Sitzen einer Person auf dem oberen Sitzelement des Fahrzeugsitzes bedeuten. Ist das obere Sitzelement mit der Masse, beispielsweise eben der Person, belegt, so kann die Person mittels einer Einstellvorrichtung die gewünschte Sitzhöhe des Fahrzeugsitzes einstellen, welche in einem bestimmten Abstand zwischen dem unteren und dem oberen Sitzelement resultiert. Entsprechend wird das Zusatzvolumen und hierdurch indirekt die erste Luftfeder mittels des Kompressors mit einer benötigten Fluidmenge befüllt, bis ein notwendiger Innendruck der ersten Luftfeder erreicht wurde. Der Kompressor wird nach dem Befüllen deaktiviert.

Wird dann erkannt, dass eine Änderung des Abstandes durch eine Gewichtsverlagerung der Masse vorliegt, so ist es notwendig, den Innendruck der ersten Luftfeder zu verändern und an die Änderung des Abstandes anzupassen, um der Änderung des Abstandes entgegenzuwirken. Um nicht den Kompressor verwenden zu müssen, wird hierbei Fluid entsprechend der Änderung des Abstandes zwischen dem Zusatzvolumen und dem Hilfsvolumen mittels der Fluidfördereinheit gefördert.

Insgesamt sei hierbei darauf hingewiesen, dass es sich bei der Änderung des Abstandes um eine, im Vergleich zu einer Schwingungsbewegung aufgrund von äußeren Kraftstößen, langsame Änderung handelt. Eine Änderung des Abstandes erfolgt demnach über einen längeren Zeitraum. Darüber hinaus ist auch der Betrag der Abstandsänderung deutlich kleiner als ein Betrag eines Kraftstoßes von außen. Die Änderung des Abstandes verläuft entsprechend deutlich langsamer als die Änderung des Abstandes aufgrund eines äußeren Kraftstoßes. Hierbei handelt es sich um eine langsame automatische Niveaustabilisierung.

Weiterhin ist denkbar, eine schnelle Ansteuerung der Vorrichtung zu realisieren, um den vorkommenden Kraftstößen entgegenzuwirken. Hierbei handelt es sich um eine schnelle Niveaustabilisierung.
Alternativ ist auch eine manuelle Änderung des Abstandes mittels der Vorrichtung und nicht durch den Betrieb eines Kompressors möglich. Hierbei handelt es sich um eine manuelle Niveauregulierung
Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: eine erste bevorzugte Ausführungsform,
- Fig. 2: eine zweite bevorzugte Ausführungsform,
- Fig. 3: eine dritte bevorzugte Ausführungsform,

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

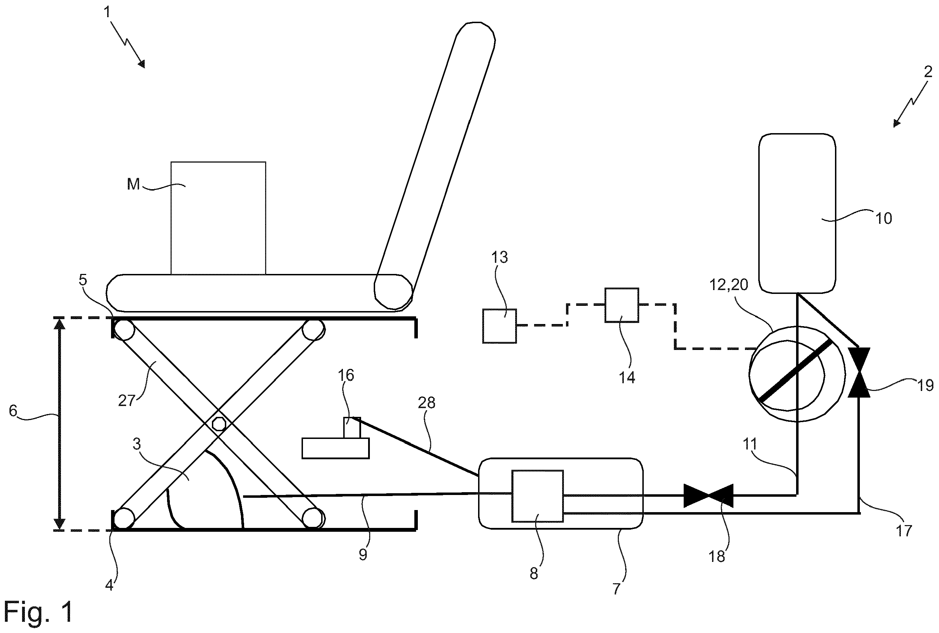

In der Figur 1 ist eine erste bevorzugte Ausführungsform der vorliegenden Erfindung dargestellt. Hierbei ist die Fluidfördereinheit 12 als eine Flügelzellenpumpe 20 ausgebildet, welche zwischen dem Zusatzvolumen 8 des Zusatzvolumenmoduls 7 und dem Hilfsvolumen 10 angeordnet ist. Weiter ist zwischen dem Zusatzvolumenmodul 7 und der Flügelzellenpumpe 12, 20 ein erstes Ventil 18 angeordnet, welches insbesondere als ein Magnetventil 18 ausgebildet ist.

Auf dem oberen Sitzelement 5 ist hierbei eine Masse M angeordnet, welches beispielsweise eine Person sein kann. Zwischen dem oberen 5 und dem unterem Sitzelement 4 ist ein Abstand 6 eingestellt, welcher einhergeht mit einem bestimmten Innendruck der ersten Luftfeder 3, welche zwischen dem unteren 4 und dem oberen Sitzelement 5 angeordnet ist. Das untere 4 und das obere Sitzelement 5 sind vorliegend mittels eines Scherengestells 27 miteinander verbunden.

Eine Einstellung des Abstandes 6 erfolgte hierbei mit Hilfe einer Kompressoreinheit 16, welcher mittels einer dritten Fluidverbindung 28 mit dem Zusatzvolumenmodul 7 und insbesondere dem Zusatzvolumen 8 fluidisch verbunden ist. Mittels der Kompressoreinheit 16 wird das Zusatzvolumen 8 und indirekt durch die erste Fluidverbindung 9 die erste Luftfeder 3 mit einer Fluidmenge befüllt, um einen gewissen Innendruck in der ersten Luftfeder 3 herzustellen.

Das erste Ventil 18 ist hierbei zur Absperrung/Trennung der Fluidfördereinheit 12 vom Kreislauf vorgesehen. Das Ventil 18 ist dann geöffnet, wenn die Fluidfördereinheit 12 in Betrieb ist und Luft umpumpt.

Weiter ist eine Bypassleitung 17 zu der zweiten Fluidleitung 11 zwischen dem Zusatzvolumen 8 und dem Hilfsvolumen 10 erkennbar, wobei die Bypassleitung 17 ein zweites Ventil 19, welches insbesondere als ein Magnetventil 19 ausgestaltet ist, aufweist.

Vorliegend ist das zweite Ventil 19 geöffnet, wenn mittels der Kompressoreinheit 16 das Zusatzvolumen und die erste Luftfeder 3 befüllt werden, so dass zusätzlich auch das Hilfsvolumen 10 mit einer Fluidmenge befüllt wird. Unter einer Befüllung mit einer Fluidmenge ist hierbei sowohl eine positive als auch eine negative Befüllung zu verstehen. Eine negative Befüllung bedeutet, dass eine Fluidmenge aus der Vorrichtung 2 entfernt wird.

Im Betrieb des Fahrzeugsitzes 1 mit der Vorrichtung 2, also nach Einstellung des Abstandes 6, mit einer Masse M ist die Kompressoreinheit 16 deaktiviert. Wird eine Änderung des Abstandes 6 mittels einer Erkennungseinheit 13 erkannt, so wird mittels einer Steuereinheit 14 die Fluidfördereinheit 12 angesteuert, um den Innendruck des Zusatzvolumens 8 und der ersten Luftfeder 3 zu verändern durch Umpumpen von Fluid zwischen dem Zusatzvolumen 8 und dem Hilfsvolumen 10.

Bevorzugt ist es auch denkbar, dass die Erkennungseinheit 13 und die Steuereinheit 14 Bestandteile des Zusatzvolumenmoduls 7 sind.

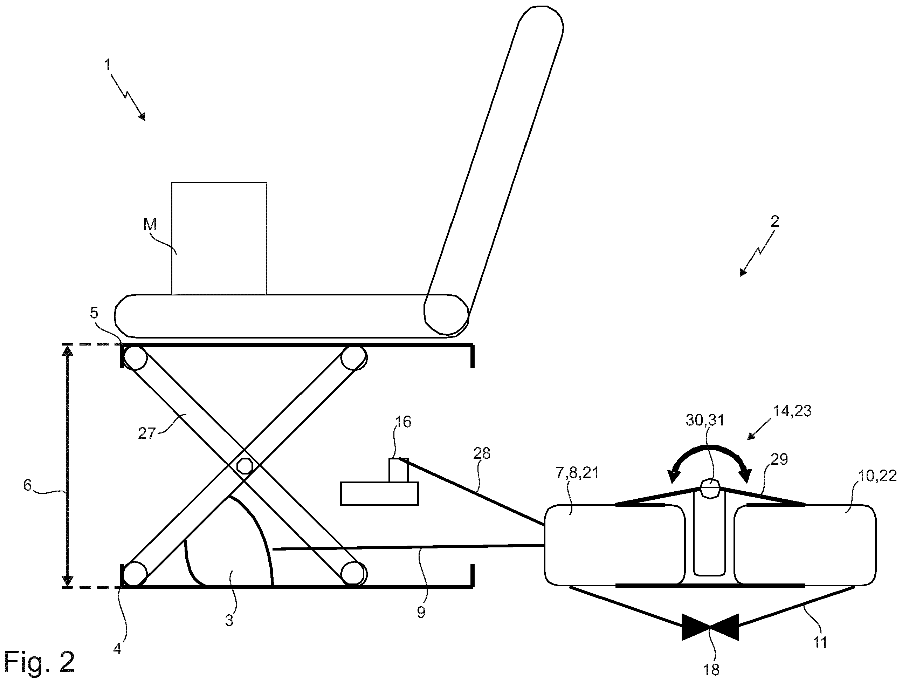

In der Figur 2 ist ein Fahrzeugsitz 1 wie bereits in der Figur 1 beschrieben erkennbar. Die Vorrichtung 2 ist im vorliegenden Fall jedoch unterschiedlich zu der Vorrichtung 2 der Figur 1. Die Vorrichtung 2 weist gemäß der Fig. 2 das Zusatzvolumen 8 in der Form einer zweiten Luftfeder 21 und das Hilfsvolumen 10 in der Form einer dritten Luftfeder 22 auf, welche insbesondere deformierbar ausgestaltet sind.

Dabei sind die zweite 21 und die dritte Luftfeder 22 wiederum mittels der zweiten Fluidverbindung 11 miteinander verbunden, wobei die zweite Fluidverbindung 11 das erste Ventil 18 aufweist. Vorliegend erfüllt hierbei die zweite Fluidverbindung 11 auch die Funktion der Bypassleitung 17 wie in Fig. 1 dargestellt und das erste Ventil 18 die Funktion des zweiten Ventils 19 wie in der Fig. 1 dargestellt.
Die Fluidfördereinheit 12 ist vorliegend als eine Deformationseinrichtung 23 ausgebildet zur Deformation der zweiten 21 oder dritten Luftfeder 22. Die Deformationseinrichtung 23 umfasst hierbei ein wippenähnliches Deformationselement 29, welches drehbar um eine Drehachse 30 mit einem Motor 31 verbunden ist. Abhängig von der Drehrichtung des Motors 31 werden die zweite Luftfeder 21 und die dritte Luftfeder 22 deformiert.

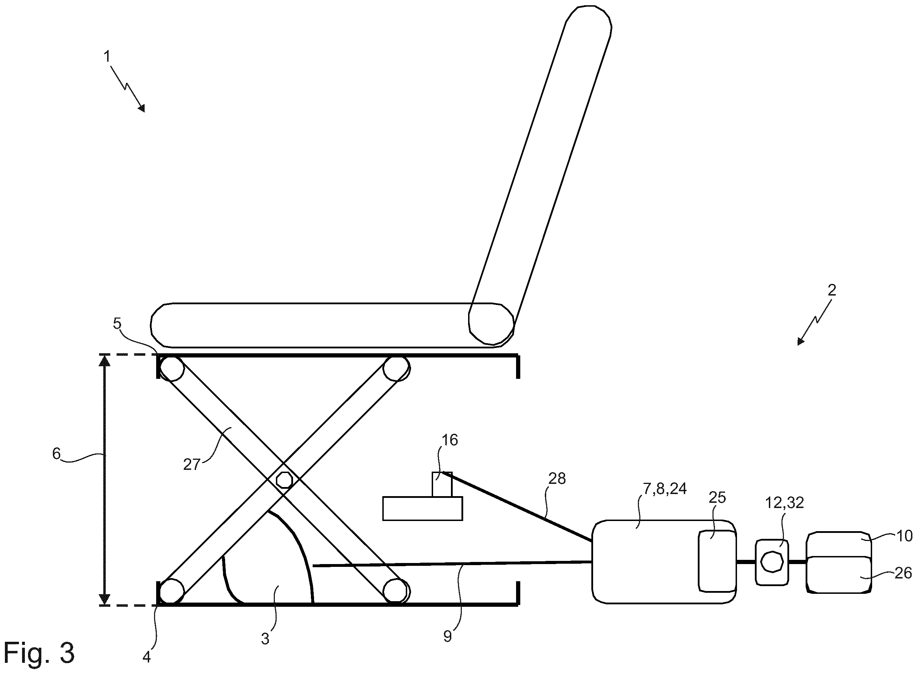

In der Figur 3 ist ein Fahrzeugsitz 1 wie bereits in der Figur 1 oder 2 beschrieben erkennbar. Die Vorrichtung 2 ist im vorliegenden Fall jedoch unterschiedlich zu der Vorrichtung 2 der
Figur 1. Die Vorrichtung 2 umfasst hierbei eine Blasenspeichereinheit 24 mit einer Speicherblase 25 als Zusatzvolumen 8, wobei in der Speicherblase 25 eine Flüssigkeit 26 anordenbar ist.
Das Hilfsvolumen 10 ist als ein Flüssigkeitsspeicher ausgebildet, in welchem ebenfalls die Flüssigkeit 26 anordenbar ist. Das Zusatzvolumen 8, 24 und das Hilfsvolumen 10 sind hierbei fluidisch mittels einer Fluidfördereinheit 12 verbunden, um die Flüssigkeit 26 zwischen der Speicherblase 25 und dem Hilfsvolumen 10 zu fördern. Durch die Kompressoreinheit 16 wird vorliegend jedoch nur die erste Luftfeder 3 und das Zusatzvolumen 8 befüllt.

### Bezugszeichenliste

- 1: Fahrzeugsitz
- 2: Vorrichtung zur Niveauregulierung
- 3: erste Luftfeder
- 4: unteres Sitzelement
- 5: oberes Sitzelement
- 6: Abstand
- 7: Zusatzvolumenmodul
- 8: Zusatzvolumen
- 9: erste Fluidverbindung
- 10: Hilfsvolumen
- 11: zweite Fluidverbindung
- 12: Fluidfördereinheit
- 13: Erkennungseinheit
- 14: Steuereinheit
- 16: Kompressoreinheit
- 17: Bypassleitung
- 18: erstes Ventil
- 19: zweites Ventil
- 20: Flügelzellenpumpe
- 21: zweite Luftfeder
- 22: dritte Luftfeder
- 23: Deformationseinrichtung
- 24: Blasenspeichereinheit
- 25: Speicherblase
- 26: Flüssigkeit
- 27: Scherengestell
- 28: dritte Fluidverbindung
- 29: Deformationselement
- 30: Drehachse
- 31: Motor
- 32: Ölpumpe

## Patentansprüche

1. Fahrzeugsitz (1) mit einer Vorrichtung (2) zur Niveauregulierung und -stabilisierung des Fahrzeugsitzes (1), wobei der Fahrzeugsitz (1) ein durch eine erste Luftfeder (3) gegenüber einem unteren Sitzelement (4) verlagerbares oberes Sitzelement (5), auf welchem eine Masse anordenbar ist, aufweist, wobei das untere (4) und das obere Sitzelement (5) in einem vorgebbaren Abstand (6) zueinander angeordnet sind und wobei die erste Luftfeder (3) mit einem Zusatzvolumen (8) eines Zusatzvolumenmoduls (7) durch eine erste Fluidverbindung (9) fluidisch verbunden und durch das Zusatzvolumenmodul (7) ein Innendruck der ersten Luftfeder (3) steuerbar ist,
**dadurch gekennzeichnet, dass**
die Vorrichtung (2) ein begrenztes Hilfsvolumen (10) aufweist, welches mittels einer Fluidfördereinheit (12) und einer zweiten Fluidverbindung (11) fluidisch mit dem Zusatzvolumen (8) gekoppelt ist, wobei bei einer Änderung des Abstandes (6) aufgrund einer Gewichtsverlagerung auf dem oberen Sitzelement (5) durch eine Förderung eines Fluid durch die Fluidfördereinheit (12) zwischen dem Hilfsvolumen (10) und dem Zusatzvolumen (8) ein Innendruck des Zusatzvolumens (8) und indirekt der ersten Luftfeder (3) veränderbar ist, um die Änderung des Abstandes (6) auszugleichen, wobei das Zusatzvolumenmodul (7) als eine Blasenspeichereinheit (24) mit einer Speicherblase (25) ausgestaltet ist und das Hilfsvolumen (10) eine Flüssigkeit (26) aufweist, wobei mittels der Fluidfördereinheit (12) umfassend eine Flüssigkeitspumpe die Flüssigkeit (26) zwischen der Speicherblase (25) und dem Hilfsvolumen (10) umpumpbar ist.

2. Fahrzeugsitz (1) mit einer Vorrichtung (2) zur Niveauregulierung und -stabilisierung des Fahrzeugsitzes (1), wobei der Fahrzeugsitz (1) ein durch eine erste Luftfeder (3) gegenüber einem unteren Sitzelement (4) verlagerbares oberes Sitzelement (5), auf welchem eine Masse anordenbar ist, aufweist, wobei das untere (4) und das obere Sitzelement (5) in einem vorgebbaren Abstand (6) zueinander angeordnet sind und wobei die erste Luftfeder (3) mit einem Zusatzvolumen (8) eines Zusatzvolumenmoduls (7) durch eine erste Fluidverbindung (9) fluidisch verbunden und durch das Zusatzvolumenmodul (7) ein Innendruck der ersten Luftfeder (3) steuerbar ist,
**dadurch gekennzeichnet, dass**
die Vorrichtung (2) ein begrenztes Hilfsvolumen (10) aufweist, welches mittels einer Fluidfördereinheit (12) und einer zweiten Fluidverbindung (11) fluidisch mit dem Zusatzvolumen (8) gekoppelt ist, wobei bei einer Änderung des Abstandes (6) aufgrund einer Gewichtsverlagerung auf dem oberen Sitzelement (5) durch eine Förderung eines Fluid durch die Fluidfördereinheit (12) zwischen dem Hilfsvolumen (10) und dem Zusatzvolumen (8) ein Innendruck des Zusatzvolumens (8) und indirekt der ersten Luftfeder (3) veränderbar ist, um die Änderung des Abstandes (6) auszugleichen, wobei das Zusatzvolumen (8) als eine deformierbare zweite Luftfeder (21) und das Hilfsvolumen (10) als eine deformierbare dritte Luftfeder (22) ausgestaltet sind, wobei eine Deformationseinrichtung (23) mit der zweiten (21) und dritten Luftfeder (22) verbunden ist und durch Deformierung der zweiten (21) oder der dritten Luftfeder (22) mittels der Deformationseinrichtung (23) der Innendruck der zweiten (21) und dritten Luftfeder (22) veränderbar ist, um den Druck der ersten Luftfeder (3) zu verändern.

3. Fahrzeugsitz (1) nach Anspruch 1 oder 2,
**dadurch gekennzeichnet, dass**
die Vorrichtung (2) eine Erkennungseinheit (13) aufweist, mittels welcher die Änderung des Abstandes (6) erkennbar ist und mittels einer Steuereinheit (14) durch die Fluidfördereinheit (12) der Innendruck der ersten Luftfeder (3) derart steuerbar ist, um die Änderung des Abstandes (6) auszugleichen.

4. Fahrzeugsitz (1) nach einem der Ansprüche 1 bis 3,
**dadurch gekennzeichnet, dass**
die Vorrichtung (2) eine Kompressoreinheit (16) aufweist, mittels welcher bei einer Belegung des oberen Sitzelements (5) mit der Masse das Zusatzvolumenmodul (7) und die erste Luftfeder (3) mit einer Fluidmenge bis zu einem bestimmten Druck befüllbar sind, wodurch der Abstand (6) vorgegeben ist.

5. Fahrzeugsitz (1) nach einem der Ansprüche 1 bis 4,
**dadurch gekennzeichnet, dass**
das Zusatzvolumen (8) und das Hilfsvolumen (10) durch eine Bypassleitung (17) zu der zweiten Fluidverbindung (11) mit einem elektrischen und/oder magnetischen ersten Ventil (18) fluidisch miteinander verbindbar sind, wobei das erste Ventil (18) geöffnet ist während des Umpumpens von Luft durch die Fluidfördereinheit (12).

6. Fahrzeugsitz (1) nach einem der Ansprüche 2 bis 5,
**dadurch gekennzeichnet, dass**
die Fluidfördereinheit (12) als eine Flügelzellenpumpe (20) oder eine Drehschieberpumpe ausgestaltet ist und zwischen dem Zusatzvolumen (8) und dem Hilfsvolumen (10) angeordnet ist, wobei zwischen dem Zusatzvolumen (8) und der Fluidfördereinheit (12) ein elektrisches und/oder magnetisches zweites Ventil (19) angeordnet ist, welches geöffnet ist während der Veränderung des Innendrucks des Zusatzvolumens (8) und der ersten Luftfeder (3).

7. Fahrzeugsitz (1) nach Anspruch 1,
**dadurch gekennzeichnet, dass**
die Flüssigkeit (26) eine hochviskose Flüssigkeit ist.

8. Verfahren zur Niveauregulierung eines Fahrzeugsitzes (1), nach einem der Ansprüche 1-7, umfassend die Verfahrensschritte:
a) Belegen des oberen Sitzelements (5) mit einer Masse;
b) Einstellen eines Abstandes (6) zwischen dem unteren (4) und dem oberen Sitzelement (5) durch Befüllen des Zusatzvolumens (8) und indirekt der ersten Luftfeder (3) durch einen Kompressor (16) mit einer benötigten Fluidmenge und Deaktivieren des Kompressors (16) nach dem Befüllen;
c) Erkennen einer Änderung des Abstandes (6) durch eine Gewichtsverlagerung der Masse;
d) Veränderung des Druckes innerhalb des Zusatzvolumens (8) und der ersten Luftfeder (3) durch Förderung des Fluids zwischen dem Zusatzvolumen (8) und dem Hilfsvolumen (10), um der Änderung des Abstandes (6) entgegenzuwirken.

## Claims

1. Vehicle seat (1) comprising a device (2) for levelling and stabilising the vehicle seat (1), the vehicle seat (1) comprising an upper seat element (5), which can be moved relative to a lower seat element (4) by a first air spring (3) and on which a mass can be arranged, the lower (4) and the upper seat element (5) being arranged at a predetermined distance (6) from one another, and the first air spring (3) being fluidically connected to an additional volume (8) of an additional volume module (7) by a first fluid connection (9), and the internal pressure of the first air spring (3) being controllable by the additional volume module (7),
**characterised in that**
the device (2) comprises a limited auxiliary volume (10), which is fluidically coupled to the additional volume (8) by means of a fluid conveying unit (12) and a second fluid connection (11), it being possible, when the distance (6) between said seat elements changes due to a shift in weight on the upper seat element (5), to change the internal pressure of the additional volume (8) and, indirectly, of the first air spring (3) by a fluid being conveyed between the auxiliary volume (10) and the additional volume (8) by means of the fluid conveying unit (12) in order to compensate for the change in distance (6), wherein the additional volume module (7) is designed as a bubble store unit (24) comprising a storage bubble (25), and the auxiliary volume (10) comprises a liquid (26), it being possible for the liquid (26) to be transferred between the storage bubble (25) and the auxiliary volume (10) by means of the fluid conveying unit (12) that comprises a liquid pump.

2. Vehicle seat (1) comprising a device (2) for levelling and stabilising the vehicle seat (1), the vehicle seat (1) comprising an upper seat element (5), which can be moved relative to a lower seat element (4) by a first air spring (3) and on which a mass can be arranged, the lower (4) and the upper seat element (5) being arranged at a predetermined distance (6) from one another, and the first air spring (3) being fluidically connected to an additional volume (8) of an additional volume module (7) by a first fluid connection (9), and the internal pressure of the first air spring (3) being controllable by the additional volume module (7),
**characterised in that**
the device (2) comprises a limited auxiliary volume (10), which is fluidically coupled to the additional volume (8) by means of a fluid conveying unit (12) and a second fluid connection (11), it being possible, when the distance (6) between said seat elements changes due to a shift in weight on the upper seat element (5), to change the internal pressure of the additional volume (8) and, indirectly, of the first air spring (3) by a fluid being conveyed between the auxiliary volume (10) and the additional volume (8) by means of the fluid conveying unit (12) in order to compensate for the change in distance (6), wherein the additional volume (8) is designed as a deformable second air spring (21), and the auxiliary volume (10) is designed as a deformable third air spring (22), a deformation apparatus (23) being connected to the second (21) and third air spring (22), and it being possible to change the internal pressure of the second (21) and third air spring (22) by deforming the second (21) or the third air spring (22) by means of the deformation apparatus (23) in order to change the pressure of the first air spring (3).

3. Vehicle seat (1) according to claim 1 or 2,
**characterised in that**
the device (2) comprises a detection unit (13), by means of which the change in distance (6) can be detected, and the internal pressure of the first air spring (3) can be controlled by the fluid conveying unit (12) by means of a control unit (14) so as to compensate for the change in distance (6).

4. Vehicle seat (1) according to any of claims 1 to 3,
**characterised in that**
the device (2) comprises a compressor unit (16) which, when the upper seat element (5) is covered by the mass, is used to fill the additional volume module (7) and the first air spring (3) with fluid up to a specific pressure, thereby specifying the distance (6).

5. Vehicle seat (1) according to any of claims 1 to 4,
**characterised in that**
the additional volume (8) and the auxiliary volume (10) can be fluidically interconnected by a bypass line (17) that bypasses the second fluid connection (11) and comprises an electrical and/or magnetic first valve (18), the first valve (18) being open as air is transferred by the fluid conveying unit (12).

6. Vehicle seat (1) according to any of claims 2 to 5,
**characterised in that**
the fluid conveying unit (12) is designed as a vane pump (20) or a rotary vane pump and is arranged between the additional volume (8) and the auxiliary volume (10), an electrical and/or magnetic second valve (19) that is open as the internal pressure of the additional volume (8) and of the air spring (3) is changed being arranged between the additional volume (8) and the fluid conveying unit (12).

7. Vehicle seat (1) according to claim 1,
**characterised in that**
the liquid (26) is a highly viscous liquid.

8. Method for levelling a vehicle seat (1), according to any of claims 1-7, comprising the steps of:
a) covering the upper seat element (5) with a mass;
b) setting a distance (6) between the lower (4) and the upper seat element (5) by filling the additional volume (8) and, indirectly, the first air spring (3) with a necessary amount of fluid by means of a compressor (16), and deactivating the compressor (16) after the filling process;
c) detecting a change in the distance (6) as a result of a shift in weight of the mass;
d) changing the pressure inside the additional volume (8) and the first air spring (3) by conveying the fluid between the additional volume (8) and the auxiliary volume (10) in order to counteract the change in distance (6).

## Revendications

1. Siège de véhicule (1) comportant un dispositif (2) pour le réglage et la stabilisation du niveau du siège de véhicule (1), le siège de véhicule (1) présentant un élément supérieur de siège (5) qui est déplaçable par rapport à un élément inférieur de siège (4) par un premier ressort pneumatique (3) et sur lequel une masse est apte à être disposée, l'élément inférieur de siège (4) et l'élément supérieur de siège (5) étant disposés à une distance prédéterminée (6) l'un par rapport à l'autre, et le premier ressort pneumatique (3) étant relié fluidiquement à un volume additionnel (8) d'un module de volume additionnel (7) par une première liaison fluidique (9), et une pression interne du premier ressort pneumatique (3) étant contrôlable par le module de volume additionnel (7),
**caractérisé par le fait que**
le dispositif (2) présente un volume auxiliaire limité (10), lequel est couplé fluidiquement au volume additionnel (8) au moyen d'une unité de transport de fluide (12) et d'une seconde liaison fluidique (11), où, lors d'un changement de la distance (6) en raison d'un déplacement de poids sur l'élément supérieur de siège (5), une pression interne du volume additionnel (8) et, indirectement, du premier ressort pneumatique (3), est apte à être changée par un transport d'un fluide par l'unité de transport de fluide (12) entre le volume auxiliaire (10) et le volume additionnel (8), pour compenser le changement de la distance (6), le module de volume additionnel (7) étant agencé en tant qu'unité accumulateur à vessie (24) avec une vessie d'accumulateur (25) et le volume auxiliaire (10) présentant un liquide (26), le liquide (26) étant transférable par pompage entre la vessie d'accumulateur (25) et le volume auxiliaire (10) au moyen de l'unité de transport de fluide (12) comportant une pompe à liquide.

2. Siège de véhicule (1) comportant un dispositif (2) pour le réglage et la stabilisation du niveau du siège de véhicule (1), le siège de véhicule (1) présentant un élément supérieur de siège (5) qui est déplaçable par rapport à un élément inférieur de siège (4) par un premier ressort pneumatique (3) et sur lequel une masse est apte à être disposée, l'élément inférieur de siège (4) et l'élément supérieur de siège (5) étant disposés à une distance prédéterminée (6) l'un par rapport à l'autre, et le premier ressort pneumatique (3) étant relié fluidiquement à un volume additionnel (8) d'un module de volume additionnel (7) par une première liaison fluidique (9), et une pression interne du premier ressort pneumatique (3) étant contrôlable par le module de volume additionnel (7),
**caractérisé par le fait que**
le dispositif (2) présente un volume auxiliaire limité (10), lequel est couplé fluidiquement au volume additionnel (8) au moyen d'une unité de transport de fluide (12) et d'une seconde liaison fluidique (11), où, lors d'un changement de la distance (6) en raison d'un déplacement de poids sur l'élément supérieur de siège (5), une pression interne du volume additionnel (8) et, indirectement du premier ressort pneumatique (3), est apte à être changée par un transport d'un fluide par l'unité de transport de fluide (12) entre le volume auxiliaire (10) et le volume additionnel (8), pour compenser le changement de la distance (6), le volume additionnel (8) étant agencé en tant que deuxième ressort pneumatique déformable (21) et le volume auxiliaire (10) étant agencé en tant que troisième ressort pneumatique déformable (22), un dispositif de déformation (23) étant relié au deuxième (21) et au troisième ressort pneumatique (22) et, par déformation du deuxième (21) ou du troisième ressort pneumatique (22) au moyen du dispositif de déformation (23), la pression interne du deuxième (21) et du troisième ressort pneumatique (22) étant apte à être changée pour changer la pression du premier ressort pneumatique (3).

3. Siège de véhicule selon l'une des revendications 1 ou 2,
**caractérisé par le fait que**
le dispositif (2) présente une unité de détection (13) au moyen de laquelle le changement de la distance (6) est détectable et la pression interne du premier ressort pneumatique (3) est contrôlable par l'unité de transport de fluide (12) au moyen d'une unité de commande (14) pour compenser le changement de la distance (6).

4. Siège de véhicule selon l'une des revendications 1 à 3,
**caractérisé par le fait que**
le dispositif (2) présente une unité compresseur (16) au moyen de laquelle, lorsque l'élément supérieur de siège (5) est occupé par la masse, le module de volume additionnel (7) et le premier ressort pneumatique (3) sont aptes à être remplis par une quantité de fluide jusqu'à une pression définie, ce par quoi la distance (6) est prédéterminée.

5. Siège de véhicule selon l'une des revendications 1 à 4,
**caractérisé par le fait que**
le volume additionnel (8) et le volume auxiliaire (10) sont reliés l'un à l'autre fluidiquement par une conduite de dérivation (17) qui contourne la deuxième liaison fluidique (11) ayant une première soupape électrique et/ou magnétique (18), la première soupape (18) étant ouverte lors du transfert par pompage de l'air par l'unité de transport de fluide (12).

6. Siège de véhicule selon l'une des revendications 2 à 5,
**caractérisé par le fait que**
l'unité de transport de fluide (12) est agencée en tant que pompe à palettes (20) ou pompe à tiroirs rotatifs et disposée entre le volume additionnel (8) et le volume auxiliaire (10), où entre le volume additionnel (8) et l'unité de transport de fluide (12), est disposée une seconde soupape électrique et/ou magnétique (19), laquelle est ouverte pendant le changement de la pression interne du volume additionnel (8) et du premier ressort pneumatique (3).

7. Siège de véhicule selon la revendication 1,
**caractérisé par le fait que**
le liquide (26) est un liquide hautement visqueux.

8. Procédé pour le réglage du niveau d'un siège de véhicule selon l'une des revendications 1 à 7, comportant les caractéristiques de procédé suivantes :
a) occupation de l'élément supérieur de siège (5) par une masse ;
b) réglage d'une distance (6) entre l'élément inférieur de siège (4) et l'élément supérieur de siège (5) par remplissage du volume additionnel (8) et indirectement du premier ressort pneumatique (3) par un compresseur (16) avec une quantité nécessaire de fluide et désactivation du compresseur (6) après le remplissage ;
c) détection d'un changement de la distance (6) par un déplacement de poids de la masse ; et
d) changement de la pression à l'intérieur du volume additionnel (8) et du premier ressort pneumatique (3) par transport du fluide entre le volume additionnel (8) et le volume auxiliaire (10) pour contrer le changement de la distance (6).
